# FASCICULE DE BREVET EUROPEEN

(11) **EP 0 845 132 B1**
(45) Date de publication et mention de la délivrance du brevet: **28.06.2000**
(21) Numéro de dépôt: 95926427.6
(22) Date de dépôt: 26.07.1995
(51) Int. Cl.: G07F 7/10, G06K 17/00

(54) **DISPOSITIF ET PROCEDE DE CONTROLE ET DE TRAITEMENT DE CHEQUES BANCAIRES**
VORRICHTUNG UND VERFAHREN ZUR KONTROLLE UND BEHANDLUNG VON BANKSCHECKS
DEVICE AND METHOD FOR CHECKING AND PROCESSING BANK CHEQUES

(43) Date de publication de la demande: 03.06.1998
(73) Titulaire: CKD S.A., 92024 Nanterre Cedex (FR)
(72) Inventeur: CHARLES, Camille, F-13410 Lambesc (FR)
(74) Mandataire: Marek, Pierre
(86) Numéro de dépôt international: FR9501000
(87) Numéro de publication internationale: WO9705583

(56) Documents cités:
- EP-A- 0 147 730
- EP-A- 0 267 114
- EP-A- 0 492 900
- EP-A- 0 567 712
- FR-A- 2 577 704
- FR-A- 2 581 776
- FR-A- 2 583 341
- FR-A- 2 616 937
- FR-A- 2 650 094
- GB-A- 2 212 641
- US-A- 4 376 279

## Description

La présente invention concerne un dispositif de contrôle et de traitement de chèques bancaires ou titres de paiement analogues. Plus précisément, l'invention se rattache aux dispositifs de contrôle et de traitement de chèques bancaires remis par un client à un fournisseur ou rédigé par un client pour un fournisseur. De tels dispositifs comprennent communément : des moyens d'introduction et d'entraînement des chèques le long d'un trajet de traitement, des moyens d'identification du chèque permettant la lecture de leur code graphique et magnétique conventionnellement désigné sous le nom de code CMC7, des moyens de remplissage du chèque comprenant un clavier et une tête d'impression, des moyens d'impression permettant l'endos du chèque, des moyens permettant l'entrée des montants encaissés dans une mémoire dont les données stockées peuvent subir différents traitements et/ou tris, par exemple pour être ultérieurement imprimées sur un bordereau de remise de chèque approprié.

Un dispositif de ce genre est, par exemple, décrit dans les documents FR-A-2.579.345 et FR-A-2.583.341.

Dans le document FR-2.583.341 A, est par exemple décrit un dispositif pour le traitement de chèques comprenant un ensemble de postes électromécaniques permettant aux commerçants d'éditer des chèques à partir d'indications fournies par le titulaire présumé du compte, dans le but d'établir des titres de paiement clairement lisibles pour les clients et facilitant leur traitement électronique ultérieur par les banques. Toutefois, le procédé de traitement mis en oeuvre par ce dispositif ne prévoit aucune intervention permettant de vérifier que le présentateur du chèque est bien le véritable titulaire du compte et que ce chèque est valable.

Les dispositifs de lecture et d'édition de chèques connus de ce genre, permettent la lecture des chèques par identification de leur code CMC7. Lorsque le chèque a été identifié, il est possible d'interroger une base de données, par exemple le Fichier National des Chèques Interdits (FNCI), en passant par le Minitel (Marque déposée) ou par un système modulateur démodulateur connecté à un réseau de télécommunication (Modem), qui peut donner des informations sur la validité du chèque.

Toutefois, si le chèque vient d'être volé ou si les fichiers du FNCI ne sont pas à jour au moment de l'interrogation, la réponse risque d'être erronée.

Pour combattre la fraude résultant de l'utilisation des carnets de chèques volés, on connait (FR-A-2.577.704) un procédé et une machine suivant lesquels un code secret est calculé, au moyen d'un algorithme, par l'établissement bancaire, pour chacun de ses clients auxquels ce code secret est communiqué confidentiellement. Ce code secret peut être calculé, au moyen du même algorithme, par des appareils de vérification ou validation remis aux bénéficiaires (par exemple commerçants) et dont l'électronique interne possède cet algorithme. De la sorte, les bénéficiaires sont immédiatement avertis en cas de non concordance entre le code secret véritable et le code proposé par la personne qui remet le chèque.

Toutefois, selon le document FR-A-2.577.704, les moyens de calcul (algorithme de codage) peuvent être soit cablés en prédiffusé ou en logique standard, soit réalisés en logiciel, ce qui implique que l'algorithme de codage peut être connu par des tierces personnes, de sorte que l'inviolabilité du système n'est pas garantie.

Un premier objet de l'invention est donc de remédier à cet inconvénient.

Selon une première disposition caractéristique de l'invention, celle-ci vise un procédé de contrôle et de traitement de chèques bancaires, suivant lequel un code secret est calculé, à partir du numéro de compte lu sur le chèque donné en paiement, sous la forme de son code CMC7, par une puce spécialisée (ASIC) équipant un dispositif de traitement de chèque possédé par un bénéficiaire, puis comparé avec le code secret introduit dans ledit dispositif par le possesseur dudit chèque pour déterminer si celui-ci est bien le véritable titulaire du compte, caractérisé en ce que les codes secrets communiqués par l'établissement bancaire aux titulaires de comptes bancaires, sont générés par cette même puce spécialisée (ASIC), au moyen d'un polynôme de codage inconnu et à partir d'un mot de passe ou code superviseur et des numéros des comptes bancaires des clients dudit établissement bancaire.

La mise en oeuvre de ce procédé garantit une inviolabilité réelle de la puce par rapport à la génération des codes secrets.

Selon une autre disposition caractéristique, le procédé de l'invention est remarquable par le fait que les coéfficients du polynôme générateur sont générés de façon aléatoire par un ordinateur, au moment de la conception de la puce spécialisée.

Selon une autre disposition caractéristique, le procédé selon l'invention est également remarquable par le fait que la puce spécialisée (ASIC) est conformée, au niveau de la génération des codes secrets, de manière à s'auto-annihiler après un certain nombre de tentatives d'introduction de mots de passe ou codes superviseurs erronés, par exemple après trois tentatives.

Selon une autre disposition caractéristique, le procédé de l'invention est remarquable en ce que la puce spécialisée (ASIC) est conformée de manière à générer une indication de refus du chèque après un certain nombre d'introductions de codes secrets erronnés, par exemple après trois introductions de codes secrets erronnés.

Selon une autre disposition caractéristique, le procédé de l'invention est remarquable par le fait que l'on stocke, dans une pile-mémoire de la puce spécialisée (ASIC) un certain nombre de numéros de comptes introduits avec des codes secrets erronnés, par exemple une vingtaine, et en ce que ladite puce spécialisée (ASIC) est conformée pour générer une information de refus lors de l'introduction d'un numéro de compte déjà introduit avec un code secret erronné.

Suivant une autre disposition caractéristique, ce procédé est encore remarquable par le fait qu'une période, de l'ordre de 1 à 3 secondes, est imposée entre les introductions de codes secrets, afin d'éviter des présentations "en rafale" de codes secrets, par des moyens informatiques.

Le dispositif de contrôle et de traitement de chèques bancaires selon l'invention comprend des moyens pour l'introduction d'un chèque et des moyens pour la lecture du numéro de compte ou code CMC7 figurant sur ce chèque, des moyens permettant l'introduction d'un code secret et des moyens d'identification de ce code secret, une puce spécialisée (ASIC) permettant de calculer un code secret à partir du numéro de compte ou code CMC7 lu sur un chèque bancaire, de comparer le code secret ainsi généré avec le code secret introduit par le possesseur du chèque, et de fournir une réponse sur le résultat de cette comparaison, cette puce spécialisée (ASIC) est conformée de manière à générer une indication de refus du chèque après un certain nombre d'introductions de codes secrets erronnés, par exemple après trois introductions de codes secrets erronnés, ce dispositif étant remarquable en ce que ladite puce spécialisée (ASIC) contient une pile-mémoire permettant de stocker un certain nombre de numéros de compte introduits avec des codes secrets erronnés, par exemple une vingtaine, et en ce que ladite puce spécialisée est conformée pour générer une information de refus lors de l'introduction d'un numéro de compte déjà présenté avec un code secret erronné.

Grâce au procédé et au dispositif selon l'invention exposés ci-dessus, le bénéficiaire du chèque, le plus souvent un commerçant, peut vérifier instantanément si le possesseur de ce chèque est bien le véritable titulaire du compte bancaire figurant sur ledit chèque.

Ce procédé et ce dispositif procurent une sécurité accrue contre Les différentes formes de fraude possibles.

Un autre avantage découlant de la mise en oeuvre de ce procédé et de ce dispositif est qu'elle ne nécessite aucune modification des chèques actuellement délivrés par les organismes bancaires.

Le dispositif de contrôle et de traitement de chèque peut être avantageusement du genre comportant une platine de base sur laquelle sont installées les parties constituantes essentielles à son fonctionnement, cette platine étant dotée de moyens de connexion permettant le positionnement et le raccordement d'au moins un et, de préférence, de plusieurs composants modulaires supplémentaires permettant d'augmenter ses fonctions ou services.

De La sorte, ce dispositif a notamment pour avantages :
- des propriétés évolutives, par un éventail d'options disponibles à tout moment dans la vie du dispositif ;
- de disposer d'une image "haut de gamme" pour la totalité des fonctions de traitement de chèques connues ;
- d'être ouvert par programmation et possibilités de connexion à des extensions de services personnalisés (relevés sur P.C., etc.) ;
- une grande facilité de mise en oeuvre (la plupart des travaux sur le chèque s'enchaînent automatiquement) et une grande facilité d'installation (nombre de connexions aussi réduit que possible) ;
- un prix tout à fait comparable à celui des meilleurs appareils actuellement offerts sur le marché.

Les buts, caractéristiques et avantages ci-dessus, et d'autres encore, ressortiront mieux de la description qui suit et des dessins annexés dans lesquels :

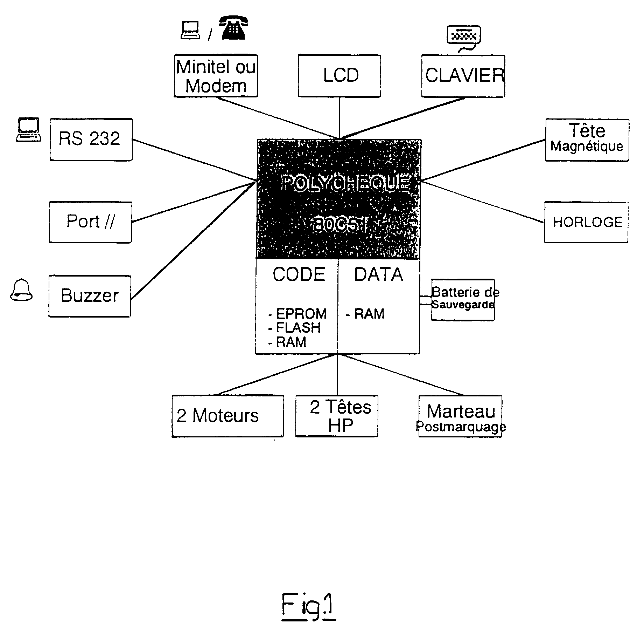

La figure 1 est une vue synoptique du dispositif de traitement de chèques selon l'invention.

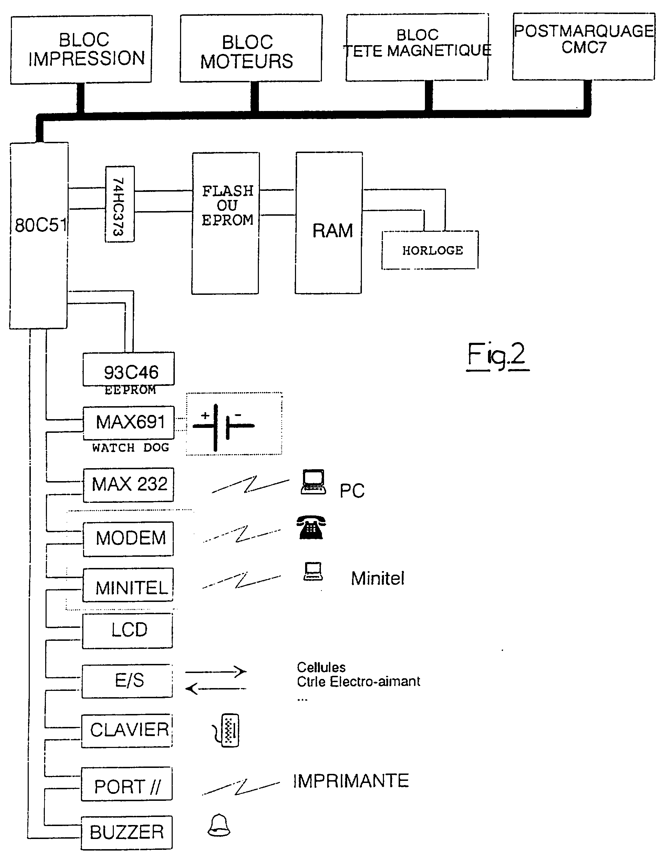

La figure 2 est une autre vue synoptique de ce dispositif analogue à la précédente.

La figure 3 est une vue synoptique de la puce spécialisée (ASIC).

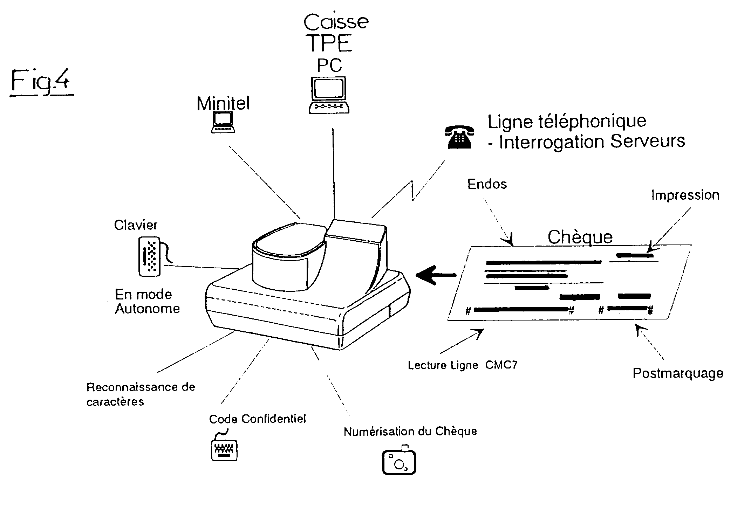

La figure 4 illustre les différentes options possibles de l'appareil de traitement de chèque, à savoir :
- connecté à un Minitel (Marque déposée) ;
- autonome avec un clavier ;
- en esclave, connecté à un PC, ou à un TPE, ou à une caisse enregistreuse ;
- équipé d'un dispositif de numérisation (photographie) des chèques ;
- doté d'un dispositif de reconnaissance de caractères.

Les figures 5 à 10 illustrent, séparément, différentes configurations possibles de l'appareil, à savoir :

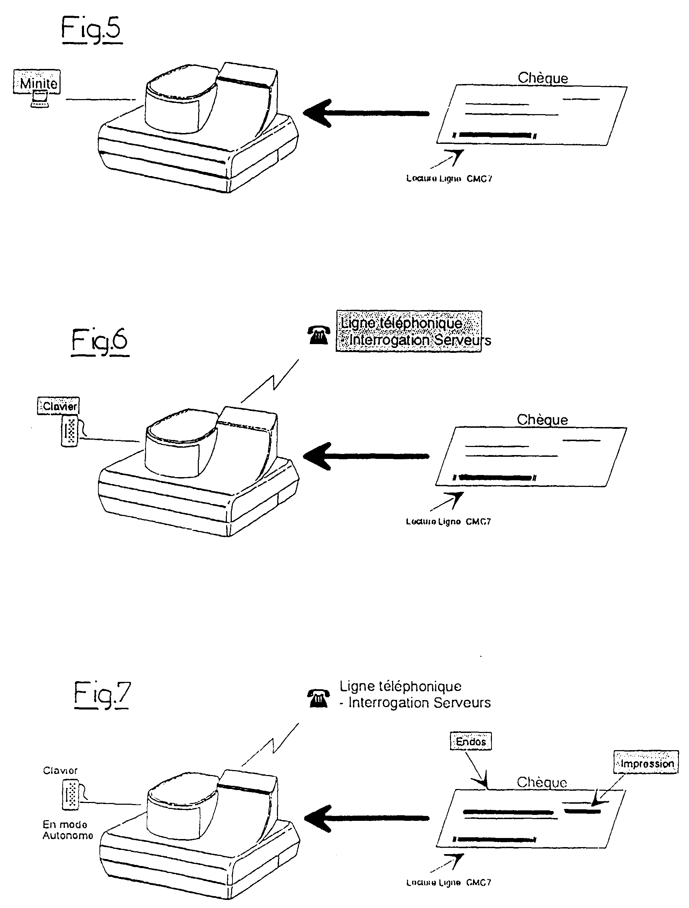

- figure 5 : connecté à un Minitel (Marque déposée) ;
- figure 6 : autonome ;

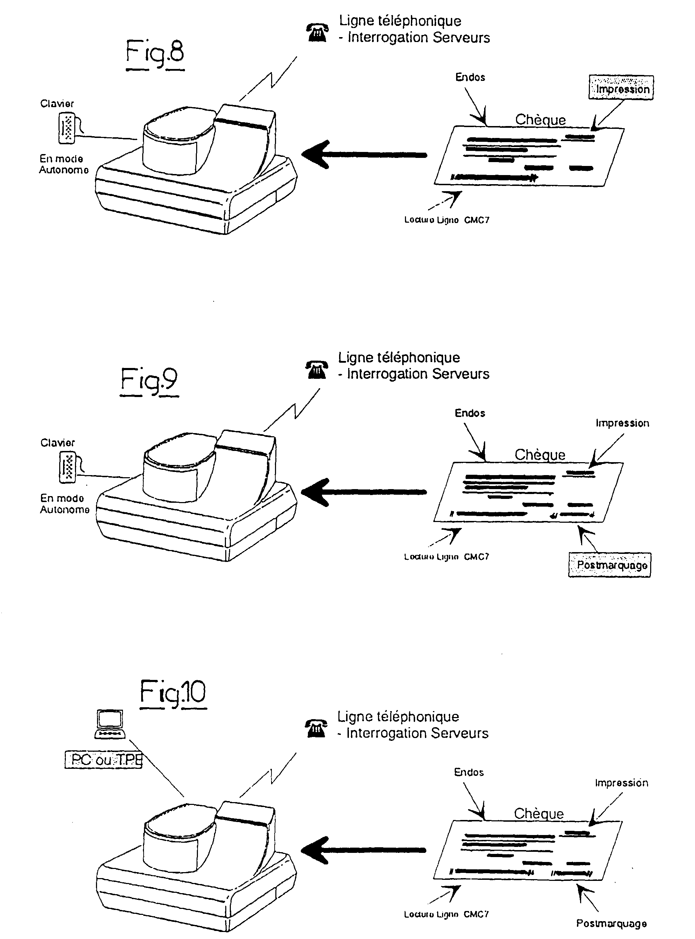

- figure 7 : avec impressions fixes ;
- figure 8 : avec impressions multilignes ;
- figure 9 : avec dispositif de post-marquage ;
- figure 10 : en esclave, connecté à un PC, ou à un TPE, ou à une caisse enregistreuse.

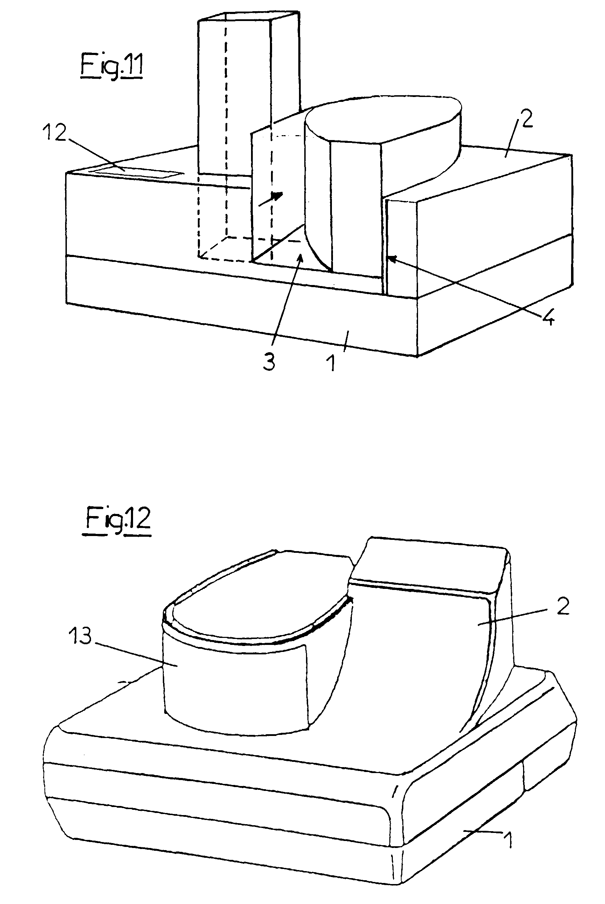

La figure 11 est une vue en perspective du boîtier renfermant les différents composants de l'appareil considéré du côté de l'admission et de la sortie des chèques.

La figure 12 est une vue en perspective de ce boîtier considéré du côté opposé.

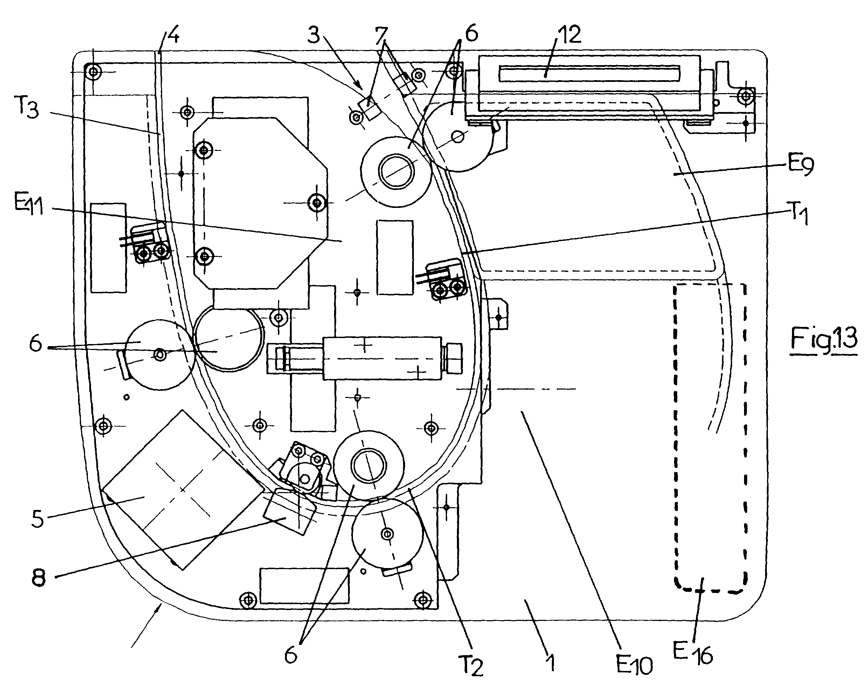

La figure 13 est une vue en plan de la platine de l'appareil équipée de ses composants de base.

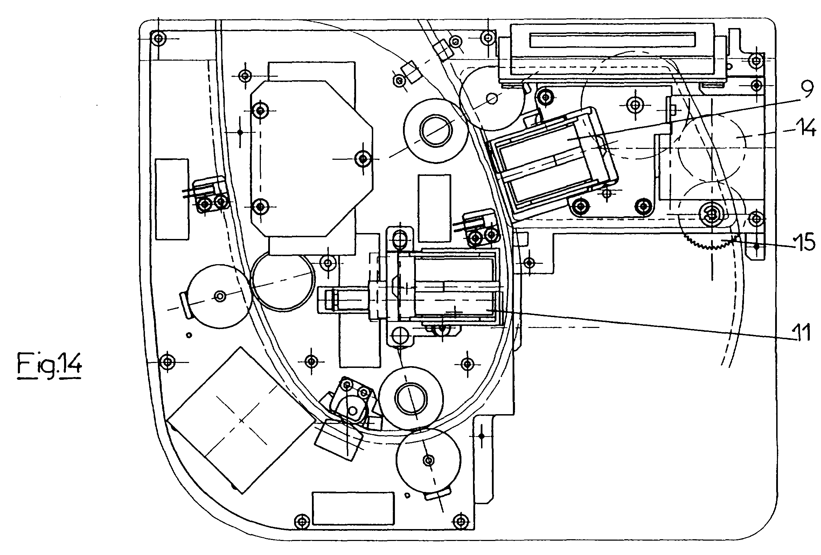

La figure 14 est une vue en plan de cette platine sur laquelle ont été installés les dispositifs modulaires d'impression.

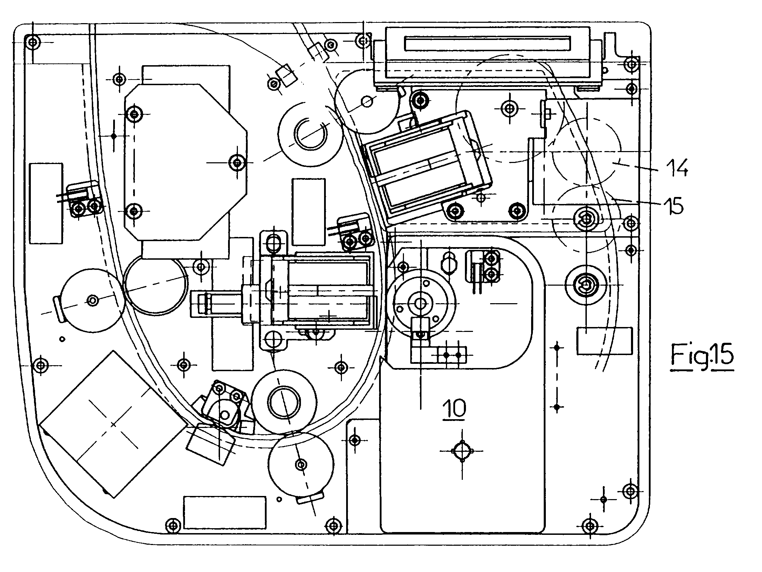

La figure 15 est une autre vue en plan de la platine sur laquelle a été connecté le dispositif modulaire de post-marquage.

On se reporte auxdits dessins pour décrire des exemples avantageux, quoique nullement limitatifs, de mise en oeuvre du procédé et de réalisation du dispositif de contrôle et de traitement de chèques selon l'invention.

Ce procédé est principalement remarquable par le fait que des codes secrets sont générés par une puce spécialisée (ASIC), à partir d'un mot de passe ou code superviseur permettant d'entrer dans cette puce et des numéros de comptes bancaires des clients d'un établissement bancaire, chaque code secret ainsi généré et propre à chaque client lui étant communiqué lors de la remise du premier chéquier. Lorsqu'un chèque est remis à un bénéficiaire, par exemple, commerçant ou prestataire de services, ce code secret est calculé , à partir du numéro de compte lu, sur le chèque, par cette même puce spécialisée (ASIC), équipant un dispositif de traitement de chèque possédé par le bénéficiaire. La puce spécialisée (ASIC) calcule le code secret à l'aide d'un algorithme tenu secret et connu de personne, et compare le code secret calculé avec le code secret introduit dans le dispositif de traitement de chèques, par le possesseur du chèque remis en paiement, pour déterminer instantanément si celui-ci est bien le véritable titulaire de compte inscrit sur le chèque.

Si le code secret indiqué par le possesseur du chèque ne correspond pas à celui qui est calculé par l'ASIC de l'appareil du bénéficiaire, le chèque est restitué à son possesseur par exemple avec la mention "CODE SECRET NON FOURNI", après trois réponses négatives.

Selon le procédé et le dispositif de l'invention, la puce spécialisée (ASIC) contient une pile-mémoire avec un compteur d'erreurs, permettant de stocker un certain nombre de numéros de comptes introduits avec des codes secrets erronnés, par exemple une vingtaine, et ladite puce spécialisée (ASIC) est conformée pour générer une information de refus lors de l'introduction d'un numéro de compte déjà introduit avec un code secret erronné.

La puce spécialisé (ASIC) contient également une horloge ménageant un espace de temps, par exemple de l'ordre de 1 à 3 secondes, entre chaque présentation du code secret, afin d'empêcher des présentations intempestives de codes, par des moyens informatiques.

Il va de soi que les établissements bancaires qui délivreront les codes secrets à leurs clients possesseurs de chéquiers, détiendront un code d'accès aux puces, leur permettant de récupérer les codes secrets. Pour cela, seront développées, des cartes avec la puce pour les ordinateurs, afin d'automatiser la génération des codes secrets.

Toutefois, on précise que les codes secrets sont calculés par l'algorithme de la puce spécialisée (ASIC) qui utilise un polynôme générateur dont les coefficients sont générés de façon aléatoire par un ordinateur au moment de la conception de la puce, afin que personne ne puisse connaître le polynôme générateur utilisé.

D'autre part, la puce spécialisée (ASIC) est conformée, au niveau de la génération des codes secrets, de manière à s'auto-annihiler après un certain nombre (par exemple trois) d'introductions de codes superviseurs erronés.

Le dispositif de traitement de chèques bancaires selon l'invention comprend (figures 11 et 12), une platine 1 supportant les différents composants dudit dispositif et un ou plusieurs capots 2 délimitant un volume clos à l'intérieur duquel sont logés ou susceptibles d'être logés lesdits composants. Ce ou ces capots 2 est ou sont fixé(s) de manière aisément démontable sur ladite platine 1, de façon à permettre un accès facile aux composants installés sur cette dernière et/ou aux connexions dont elle est équipée.

Selon l'exemple représenté, le boîtier constitué de la platine 1 et du ou des capots 2, présente, sur l'une de ses faces ou côtés, une embouchure verticale d'insertion 3 pour l'introduction des chèques et une fente de sortie 4 parallèle à ladite embouchure. Cette dernière est assez largement ouverte à l'entrée et se rétrécie progressivement suivant le sens du trajet des chèques jusqu'à devenir une simple fente autorisant le passage et le déplacement de ceux-ci.

Les chèques sont introduits verticalement, par leur largeur, dans l'embouchure 3 et restent dans leur position d'introduction durant tout leur trajet dans l'appareil, jusqu'à leur éjection de ce dernier par la fente de sortie 4.

Le déplacement des chèques est assuré par un mécanisme d'entraînement comprenant un moteur pas à pas 5 installé sur la platine 1 et des couples de galets d'entrainement et de guidage 6 répartis le long de la trajectoire desdits chèques (figure 13).

La trajectoire des chèques se compose :
- d'une première partie rectiligne ou approximativement rectiligne T1 ;
- d'une deuxième partie courbe, circulaire ou approximativement circulaire T2 ;
- d'une troisième partie rectiligne ou approximativement rectiligne T3.

Un dispositif de détection 7 disposé dans l'embouchure 3, commande la mise en fonctionnement du mécanisme d'entraînement 5-6 dès qu'un chèque est introduit manuellement dans ladite embouchure.

L'appareil de contrôle et de traitement comporte également :
- des moyens de lecture de code magnétique permettant la lecture du numéro de compte ou code CMC7 figurant sur le chèque, lesquels peuvent être constitués par une tête magnétique fixe de lecture 8, permettant de lire la partie basse du chèque, au recto ;
- des moyens permettant la composition et l'introduction d'un code secret, par exemple constitués par un clavier incorporé à l'appareil ou par un clavier connecté à ce dernier et qui peut être le clavier d'un terminal du genre Minitel (Marque déposée) ;
- des moyens d'identification et de mémorisation de ce code secret ;
- un microprocesseur, par exemple constitué par un micro-contrôleur de type 80C51 régulant le fonctionnement de l'appareil.

Selon une première disposition caractéristique, l'appareil selon l'invention comprend en outre des moyens permettant de calculer un code secret à partir du numéro de compte ou code CMC7 lu sur un chèque bancaire, et de comparer le code secret ainsi généré avec le code secret introduit par le possesseur du chèque, c'est-à-dire par la personne qui remet ce chèque à un bénéficiaire disposant dudit appareil.

De manière très avantageuse, les moyens d'identification du code secret introduit par le possesseur du chèque et les moyens permettant de calculer un code secret à partir du numéro de compte ou code CMC7 lu sur un chèque bancaire, et de comparer le code secret ainsi généré avec le code secret introduit, sont constitués par une puce spécialisée (ASIC).

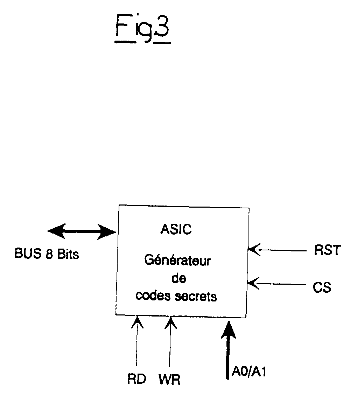

La figure 3 représente le synoptique de l'ASIC qui, comme indiqué précédemment, est conformée, lors de la génération des codes secrets, pour s'auto-annihiler après un certain nombre d'introduction de mots de passe ou codes superviseurs erronés.

Suivant sa version de base ou version simplifiée, l'appareil de traitement peut être connecté à un terminal du type Minitel (Marque déposée) permettant d'interroger une base de données telle que, par exemple, le Fichier National des Chèques Interdits (FNCI). Dans ce cas, l'appareil de traitement utilise donc, la source d'énergie, le clavier, l'écran et le Modem du "Minitel".

Toutefois, selon une autre disposition caractéristique de l'appareil de traitement selon l'invention, la platine 1 est munie de moyens de connexion permettant le positionnement et le raccordement d'au moins un et, de préférence, de plusieurs composants ou macrocomposants modulaires permettant de le rendre entièrement autonome et/ou d'élargir la gamme de ses performances ou services.

Notamment, selon cette disposition caractéristique, la platine est agencée pour recevoir :
- un module d'impression comprenant des moyens destinés à permettre l'édition automatique des chèques, c'est-à-dire, par exemple, l'inscription du montant, du nom du bénéficiaire, de la date et du lieu d'émission, etc.
- un module d'endossement comprenant des moyens pour l'endos du chèque, permettant d'apposer la signature de l'organisme encaisseur sur le dos dudit chèque ;
- un module de post-marquage comprenant des moyens pour le post-marquage du chèque, c'est-à-dire l'adjonction du montant de ce dernier à la ligne codée normalisée (CMC7) dudit chèque ;
- un système modulateur démodulateur (Modem) modulaire connecté à un réseau de télécommunication ;
- un module de numérisation comprenant des moyens de numérisation des chèques, permettant de réaliser des photographies des chèques, des moyens de stockage de ces photographies dans le dispositif de traitement, et/ou des moyens de transfert permettant de les transférer électroniquement à un organisme bancaire ;
- une alimentation 220 V ;
- le branchement d'un clavier avec ou sans écran, etc.

Seul le clavier-écran modifie l'aspect extérieur du dispositif de contrôle et de traitement, sous forme d'une pièce rapportée sur le boîtier de base.

Sur la figure 13, on voit, par exemple :
- l'emplacement E9 prévu pour le positionnement et la connexion d'un dispositif modulaire d'impression permettant l'édition du chèque ;
- l'emplacement E10 pour le montage et le raccordement d'un dispositif modulaire de post-marquage ;
- l'emplacement E11 pour l'installation et la connexion d'un dispositif modulaire d'impression permettant d'effectuer l'endos du chèque ;
- l'emplacement E16 réservé au positionnement et à la connexion du dispositif modulaire de numérisation des chèques.

La platine et les composants susmentionnés sont munis de moyens de raccordement complémentaires, connus en soi et permettant leur connexion rapide, par exemple par simple enfichage.

Suivant la figure 14, on a représenté l'adjonction :
- d'une tête d'impression motorisée 9 disposée sur la première partie approximativement rectiligne T1 de la trajectoire des chèques, destinée au traitement de leur recto, c'est-à-dire à l'édition de ceux-ci ; cette tête d'impression multilignes mobile accouplée à un moteur d'entraînement 14 peut être du type à jet d'encre et elle est animée d'un mouvement de montée/baisse vertical, d'une amplitude de l'ordre de 80 mm, en cours de fonctionnement ;
- d'une tête d'impression 11 également placée sur la première partie approximativement rectiligne de la trajectoire T1, en aval de la tête d'impression multilignes 9 ; cette tête d'impression destinée à permettre l'endos des chèques, peut être de même nature que la précédente, mais mécaniquement fixe, de manière à traiter l'endos des documents à mi-hauteur de ces derniers.

Selon la figure 15, on a représenté l'adjonction d'un système d'impression magnétique 10 disposé sur la portion terminale de la première partie rectiligne T1 de la trajectoire des chèques et permettant le post-marquage de ces derniers ; ce système d'impression peut être avantageusement en deux parties, c'est-à-dire le ruban et la marguerite du côté recto du document et le marteau frappeur du côté verso dudit document ; il peut être entraîné par le moteur 14, par l'intermédiaire d'un engrenage 15 ou autre système de transmission.

Le dispositif de numérisation modulaire permettant de numériser l'image des chèques dans sa totalité (montant, signature et autres inscriptions) comprend principalement un capteur CCD (capteur digital) linéaire, un convertisseur analogique numérique et une mémoire constituée par une carte d'acquisition du signal vidéo numérisé, traité et stocké dans ladite mémoire.

Selon une autre disposition caractéristique de l'invention, L'appareil de contrôle et de traitement de chèques, comprend également des moyens de stockage de l'image-chèque (Ligne CMC7 + montant du chèque) correspondant à chaque chèque traité et accepté, ces moyens de stockage pouvant, par exemple, être prévus pour pouvoir stocker 500 images-chèques ; grâce à ces moyens de stockage, l'appareil de contrôle et de traitement selon l'invention peut transférer périodiquement les images-chèques stockées en mémoire, sur un compte géré par un organisme bancaire.

De préférence, compte tenu des caractéristiques modulaires précitées de l'appareil, la version de base de ce dernier comporte une unité d'affichage 12 à diodes électroluminescentes ou à cristaux liquides, visible à travers une fenêtre ménagée dans le capot 2.

D'autre part, dans une surface verticale courbe du capot 2 enveloppant la partie curviligne T2 de la trajectoire du chèque, est ménagée une large fenêtre ou plage transparente 13 à travers laquelle le possesseur du chèque peut lire le montant imprimé sur le chèque par la tête d'impression 9 et les autres inscriptions figurant sur ledit chèque.

On a représenté, schématiquement, aux figures 5 à 10, différentes configurations possibles de l'appareil de traitement de chèques précédemment décrit.

La figure 5 illustre un appareil de base connecté à un Minitel (Marque déposée) ou terminal analogue, permettant l'interrogation d'un ou plusieurs serveurs tels que FNCI, et dont il utilise le clavier, l'écran et le Modem ; dans ce cas, l'appareil permet la lecture du code CMC7, le calcul du code secret à partir de ce code et sa comparaison avec le code secret introduit par le possesseur du chèque.

La figure 6 illustre un appareil de base autonome possédant son propre Modem et complété par un clavier ; l'interrogation du ou des serveurs s'effectuant au moyen d'une ligne téléphonique classique.

La figure 7 montre une configuration d'appareil autonome pourvu de moyens d'impressions fixes permettant d'éditer et d'endosser les chèques sur une ligne fixe.

La figure 8 représente une configuration d'appareil autonome pourvu de moyens d'impression multilignes permettant l'impression sur toute la surface du chèque.

La figure 9 illustre la configuration d'un appareil autonome équipé de moyens donnant la possibilité de post-marquer le chèque avec le montant, ainsi que le bordereau de remise de chèques.

La figure 10 montre la configuration d'un appareil autonome utilisé en esclave d'un PC, ou d'un TPE (pour faire de l'image chèque) ou d'une caisse enregistreuse.

L'appareil de contrôle et de traitement de chèques bancaires ou autres selon l'invention peut également être conformé pour pouvoir être connecté à un réseau de télécommunication numérique à intégration de service, du type Numéris (Marque déposée).

La figure 3 illustre, comme indiqué précédemment, les différents éléments constituant la puce spécialisée pour lesquels les abréviations sont explicitées ci-après :
- **RST** :: Mise à zéro du circuit (RESET)
- **RD** :: Mode LECTURE
- **WR :**: Mode ECRITURE
- **CS** :: Sélection du boîtier
- **BUS 8 BITS** :: Bus par lequel transitent les données, on écrit d'abord le NUMERO DE COMPTE puis on vient lire le CODE SECRET.
- **A0/A1 :**: 00 Présentation du NO de compte
01 Présentation du Code saisie
10 Réponse sur la présentation du Code/Lecture du Code secret
11 Présentation du code d'accès (3 essais) pour lire le code secret du NO de Compte.

## Revendications

1. Procédé de contrôle et de traitement de chèques bancaires, suivant lequel un code secret est calculé, à partir du numéro de compte lu sur le chèque donné en paiement, sous la forme de son code CMC7, par une puce spécialisée (ASIC) équipant un dispositif de traitement de chèque possédé par un bénéficiaire, puis comparé avec le code secret introduit dans ledit dispositif par le possesseur dudit chèque pour déterminer si celui-ci est bien le véritable titulaire du compte, caractérisé en ce que les codes secrets communiqués par l'établissement bancaire aux titulaires de comptes bancaires, sont générés par cette même puce spécialisée (ASIC), au moyen d'un polynôme de codage inconnu et à partir d'un mot de passe ou code superviseur et des numéros des comptes bancaires des clients dudit établissement bancaire.

2. Procédé selon la revendication 1, caractérisé en ce que les coéfficients du polynôme générateur sont générés de façon aléatoire par un ordinateur, au moment de la conception de la puce spécialisée.

3. Procédé suivant l'une des revendications 1 ou 2, caractérisé en ce que la puce spécialisée (ASIC) est conformée, au niveau de la génération des codes secrets, de manière à s'auto-annihiler après un certain nombre de tentatives d'introduction de mots de passe ou codes superviseurs erronés, par exemple après trois tentatives.

4. Procédé suivant l'une quelconque des revendications 1 à 3, caractérisé en ce que la puce spécialisée (ASIC) est conformée de manière à générer une indication de refus des chèques présentés, après un certain nombre d'introductions de codes secrets erronnés, par exemple après trois introductions de codes secrets erronnés dans le dispositif de traitement de chèques.

5. Procédé selon l'une quelconque des revendications 1 à 3, caractérisé en ce que l'on stocke, dans une pile-mémoire de la puce spécialisée (ASIC), un certain nombre de numéros de comptes présentés avec des codes secrets erronnés, par exemple une vingtaine, et en ce que ladite puce spécialisée (ASIC) génère une information de refus lors de la présentation d'un numéro de compte déjà présenté avec un code secret erronné.

6. Procédé suivant l'une quelconque des revendications 1 à 3, caractérisé en ce qu'une période, par exemple de l'ordre de 1 à 3 secondes, est imposée entre les introductions de codes secrets dans le dispositif de traitement de chèques.

7. Dispositif de contrôle et de traitement de chèques bancaires, comprenant des moyens pour l'introduction d'un chèque et des moyens pour la lecture du numéro de compte ou code CMC7 figurant sur ce chèque, des moyens permettant l'introduction d'un code secret, des moyens d'identification de ce code secret, et une puce spécialisée (ASIC) permettant de calculer un code secret à partir du numéro de compte ou code CMC7 lu sur un chèque bancaire, de comparer le code secret ainsi généré avec le code secret introduit par le possesseur du chèque et de fournir une réponse sur le résultat de cette comparaison, cette puce spécialisée (ASIC) étant conformée de manière à générer une indication de refus du chèque après un certain nombre d'introductions de codes secrets erronés, par exemple après trois introductions de codes secrets erronés dans ledit dispositif, caractérisé en ce que ladite puce spécialisée (ASIC) contient une pile-mémoire permettant de stocker un certain nombre de numéros de compte introduits avec des codes secrets erronés, par exemple une vingtaine, et en ce que ladite puce spécialisée est conformée pour générer une information de refus lors de l'introduction d'un numéro de compte déjà présenté avec un code secret erroné.

8. Dispositif selon l'une la revendication 7, caractérisé en ce que la puce spécialisée (ASIC) contient une horloge réglée pour imposer des périodes, par exemple de l'ordre de 1 à 3 secondes, entre les introductions de codes secrets.

9. Dispositif de contrôle et de traitement de chèques bancaires suivant la revendication 7, comportant au moins un capot (2) présentant au moins une surface verticale courbe et recouvrant les composants fonctionnels dudit dispositif, capot à l'intérieur duquel est ménagé un chemin de déplacement et de guidage des chèques introduits par leur largeur dans une embouchure verticale d'insertion (3) ménagée dans ledit capot et se déplaçant ensuite le long de ce trajet parallèlement à leur longueur, caractérisé en ce qu'une fenêtre ou plage transparente (13) largement dimensionnée, est ménagée dans ladite surface verticale courbe, pour la présentation du chèque édité au tireur.

10. Dispositif suivant la revendication 7, comprenant un module de numérisation permettant de numériser l'image des chèques dans sa totalité, caractérisé en ce que ce module de numérisation comprend principalement un capteur CCD (capteur digital) linéaire, un convertisseur analogique numérique et une mémoire constituée par une carte d'acquisition du signal vidéo numérisé, traité et stocké dans ladite mémoire.

11. Dispositif suivant l'une quelconque des revendications 7 à 10, caractérisé en ce qu'il comprend des moyens de stockage des images-chèques correspondant aux chèques traités et acceptés par l'appareil.

## Patentansprüche

1. Verfahren zur Kontrolle und Behandlung von Bankschecks, bei dem eine Geheimnummer berechnet wird ausgehend von der Kontonummer, die von dem zur Zahlung eingereichten Scheck in Form seines CMC7-Codes von einem anwendungsspezifischen IC (ASIC) abgelesen wird, mit dem die Vorrichtung zur Behandlung von Schecks ausgestattet ist, die sich im Besitz des Zahlungsempfängers befindet, und anschließend mit der Geheimnummer verglichen wird, die vom Besitzer des Schecks in diese Vorrichtung eingegeben wird, um festzustellen, ob es sich bei diesem um den tatsächlichen Kontoinhaber handelt, dadurch gekennzeichnet, daß die vom Bankinstitut den Bankkontoinhabern mitgeteilten Geheimnummern vom gleichen anwendungsspezifischen IC (ASIC) mittels eines unbekannten Codierungspolynoms und ausgehend von einem Kennwort oder Überwachungscode und den Kontonummern der Kunden des Bankinstituts generiert werden.

2. Verfahren nach Anspruch 1, dadurch gekennzeichnet, daß die Koeffizienten des Generierungspolynoms zum Zeitpunkt der Gestaltung des anwendungsspezifischen ICs von einem Computer nach dem Zufallsprinzip generiert werden.

3. Verfahren nach einem der Ansprüche 1 oder 2, dadurch gekennzeichnet, daß der anwendungsspezifische IC (ASIC) auf der Generierungsebene der Geheimnummern so ausgelegt ist, daß er sich nach einer bestimmten Anzahl von Eingabeversuchen eines fehlerhaften Kennworts oder Überwachungscodes selbst vernichtet, beispielsweise nach drei Versuchen.

4. Verfahren nach einem der Ansprüche 1 bis 3, dadurch gekennzeichnet, daß der anwendungsspezifische IC (ASIC) so ausgelegt ist, daß er nach einer bestimmten Anzahl von Eingaben fehlerhafter Geheimnummern eine Zurückweisung der vorgelegten Schecks anzeigt, wenn beispielsweise mehr als drei fehlerhafte Geheimnummern in die Vorrichtung zur Behandlung von Schecks eingegeben wurden.

5. Verfahren nach einem der Ansprüche 1 bis 3, dadurch gekennzeichnet, daß in einem Stapelspeicher des anwendungsspezifischen ICs (ASIC) eine bestimmte Anzahl von Kontonummern gespeichert wird, beispielsweise etwa 20, die mit fehlerhaften Geheimnummern vorgelegt wurden, und dadurch, daß dieser anwendungsspezifische IC (ASIC) bei der Angabe einer Kontonummer, die bereits vorher mit einer fehlerhaften Geheimnummer angegeben wurde, eine Zurückweisungsmeldung generiert.

6. Verfahren nach einem der Ansprüche 1 bis 3, dadurch gekennzeichnet, daß ein Intervall, beispielsweise in der Größenordnung von 1 bis 3 Sekunden, zwischen den einzelnen Eingaben der Geheimnummer in die Vorrichtung zur Behandlung von Schecks liegen muß.

7. Vorrichtung zur Kontrolle und Behandlung von Bankschecks, umfassend Mittel zum Einführen eines Schecks und Mittel zum Ablesen der Kontonummer bzw. des CMC7-Codes, die bzw. der sich auf diesem Scheck befindet, Mittel, welche die Eingabe einer Geheimnummer ermöglichen, Mittel zur Identifizierung dieser Geheimnummer sowie einen anwendungsspezifischen IC (ASIC), der die Berechnung einer Geheimnummer anhand der Kontonummer oder des vom Scheck abgelesenen CMC7-Codes ermöglicht, einen Vergleich der auf diese Weise generierten Geheimnummer mit der vom Scheckinhaber eingegebenen Geheimnummer gestattet und eine Antwort auf das Ergebnis dieses Vergleichs liefert, wobei dieser anwendungsspezifische IC (ASIC) so ausgelegt ist, daß er nach einer bestimmten Anzahl von Eingaben fehlerhafter Geheimnummern eine Zurückweisungsanzeige für den Scheck generiert, beispielsweise nach drei Eingaben fehlerhafter Geheimnummern in diese Vorrichtung, dadurch gekennzeichnet, daß der anwendungsspezifische IC (ASIC) einen Stapelspeicher enthält, der die Speicherung einer bestimmten Anzahl von Kontonummern ermöglicht, die mit fehlerhaften Geheimnummern eingegeben wurden, beispielsweise etwa 20, und dadurch, daß dieser anwendungsspezifische IC so ausgelegt ist, daß er eine Zurückweisungsmeldung generiert, wenn eine Kontonummer eingegeben wird, die vorher bereits mit einer fehlerhaften Geheimnummer eingegeben wurde.

8. Vorrichtung nach Anspruch 7, dadurch gekennzeichnet, daß der anwendungsspezifische IC (ASIC) einen Zeitgeber für die Einhaltung der Intervalle, beispielsweise in der Größenordnung von 1 bis 3 Sekunden, zwischen den einzelnen Eingaben der Geheimnummern enthält.

9. Vorrichtung zur Kontrolle und Behandlung von Bankschecks nach Anspruch 7, umfassend mindestens eine Abdeckhaube (2), die mindestens eine gekrümmte vertikale Oberfläche aufweist und die Funktionselemente der Vorrichtung bedeckt, eine Abdeckhaube, in deren Innenraum ein Transport- und Führungsweg für die Schecks ausgespart ist, die der Breite nach in eine vertikale Einschuböffnung (3) eingeführt werden, die in der Abdeckhaube ausgespart ist und sich anschließend entlang diesem Weg parallel zu ihrer Länge verschiebt, dadurch gekennzeichnet, daß ein großzügig bemessenes Fenster oder ein transparenter Bereich (13) in der gekrümmten vertikalen Oberfläche ausgespart ist, um den bearbeiteten Scheck dem Aussteller vorzulegen.

10. Vorrichtung nach Anspruch 7, umfassend ein Digitalisierungsmodul, das die digitale Erfassung des gesamten Scheckbildes ermöglicht, dadurch gekennzeichnet, daß dieses Digitalisierungsmodul hauptsächlich einen linearen CCD-Sensor (digitale Erfassungseinrichtung), einen Aanalog-Digital-Wandler und einen Speicher umfaßt, der aus einer Erfassungkarte für das digitale Videosignal gebildet wird, das in dem Speicher verarbeitet und gespeichert wird.

11. Vorrichtung nach einem der Ansprüche 7 bis 10, dadurch gekennzeichnet, daß sie Mittel zum Speichern der Scheckabbildungen umfaßt, die den verarbeiteten und vom Gerät akzeptierten Schecks entsprechen.

## Claims

1. Method for checking and processing bank cheques, whereby a specialised chip (ASIC) incorporated in a cheque processing device held by a beneficiary computes a secret code from the account number read on the cheque given in payment, in the form of its CMC7 code, then compares said code with the secret code keyed into said device by the bearer of said cheque in order to determine whether the latter genuinely is the account holder,
characterised in that the secret codes communicated by the banking establishment to bank account holders are generated by this same specialised chip (ASIC) by means of an unknown coding polynomial and from a password or executive code and the bank account numbers of the clients of said banking establishment.

2. Method according to claim 1, characterised in that the coefficients of the generating polynomial are generated randomly by a computer at the time when the specialised chip is created.

3. Method according to either of claims 1 and 2, characterised in that the specialised chip (ASIC) is configured, in terms of generating the secret codes, so as to self-destruct after a given number of attempts to input incorrect passwords or executive codes, for example after three attempts.

4. Method according to any of claims 1 to 3, characterised in that the specialised chip (ASIC) is configured so as to generate an advice of rejection of the presented cheques, after a given number of incorrect secret codes have been input, for example after three incorrect secret codes have been input into the cheque processing device.

5. Method according to any of claims 1 to 3, characterised in that a given number of account numbers presented with incorrect secret codes, say twenty, is stored in a memory cell of the specialised chip (ASIC), and in that said specialised chip (ASIC) generates a rejection notice whenever an account number that has already been presented with an incorrect secret code is presented.

6. Method according to any of claims 1 to 3, characterised in that a time limit, for example around 1 to 3 seconds, is imposed between the inputs of secret codes into the cheque processing device.

7. Device for checking and processing bank cheques, comprising means for introducing a cheque and means for reading the account number or CMC7 code appearing on said cheque, means enabling a secret code to be input, means for identifying this secret code, and a specialised chip (ASIC) enabling a secret code to be computed from the account number or CMC7 code read on a bank cheque, and enabling the secret code thus generated to be compared with the secret code input by the bearer of the cheque and a response to be made as to the result of this comparison, said specialised chip (ASIC) being configured so as to generate an advice that the cheque has been rejected once a given number of incorrect secret codes has been input, for example after incorrect secret codes have been input into said device three times, characterised in that said specialised chip (ASIC) contains a memory cell enabling a given number of account numbers input with incorrect secret codes to be stored, say twenty, and in that said specialised chip is configured in order to generate a rejection notice whenever an account number that has already been presented with an incorrect secret code is input.

8. Device according to claim 7, characterised in that the specialised chip (ASIC) contains a clock adjusted so as to impose time limits, for example around 1 to 3 seconds, between the inputting of secret codes.

9. Device for checking and processing bank cheques according to claim 7, having at least one shroud (2) which presents at least one curved vertical surface and covers the functional components of said device, inside which shroud is incorporated a cheque displacement and guidance path for the cheques which are introduced widthways into a vertical feed opening (3) incorporated in said shroud and then travel along this route parallel to their length, characterised in that a transparent window or area (13) of ample dimensions is incorporated in said curved vertical surface, to enable the edited cheque to be presented to the drawer.

10. Device according to claim 7, comprising a digitisation module which enables the image of the cheques as a whole to be digitised, characterised in that said digitisation module chiefly comprises a linear CCD sensor (digital sensor), an analogue to digital converter, and a memory constituted by a card for acquisition of the video signal which has been digitised, processed and stored in said memory.

11. Device according to any of claims 7 to 10, characterised in that it comprises means for storing the cheque images corresponding to the cheques processed and accepted by the machine.
